(19) Europäisches Patentamt
European Patent Office
Office européen des brevets

(11) **EP 1 128 624 A2**

(12) **EUROPEAN PATENT APPLICATION**

(43) Date of publication:
**29.08.2001 Bulletin 2001/35**

(51) Int Cl.$^7$: **H04L 27/26**

(21) Application number: **01103124.2**

(22) Date of filing: **09.02.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(30) Priority: **23.02.2000 US 511887**<br><br>(71) Applicant: **TRW Inc.**<br>**Redondo Beach, California 90278 (US)** | (72) Inventor: **Usevitch, Bryan E.**<br>**El Paso, TX 79912 (US)**<br><br>(74) Representative: **Schmidt, Steffen J., Dipl.-Ing.**<br>**Wuesthoff & Wuesthoff,**<br>**Patent- und Rechtsanwälte,**<br>**Schweigerstrasse 2**<br>**81541 München (DE)** |

(54) **Code selection for suppression of adjacent channel interference in FDM DPSK**

(57) An orthogonal frequency division multiplexing (FDM) communications system (10) for exchanging radio frequency (RF) (16) signals. The communication system (10) includes a plurality of transmitters (12) adapted to modulate a pair of RF signals using differential phase shift keying (DPSK). A code shift function (18) is adapted to shift the transmitter codes to obtain complete SDPSK orthogonal (CSO) codes in symmetric DPSK (SDPSK) modulated systems, or complete DPSK (CDO) codes in arbitrary DPSK modulated systems. At least one receiver (14) is adapted to receive the modulated signals from the transmitters (12), wherein adja-cent channel interference (ACI) of the communications system is minimized and spectral efficiency is increased. The method (100) for SDPSK modulated systems includes the steps of establishing sets of mutually CSO codes (102), establishing relative code shifts and frequency separations for each CSO code (104), and combining the RF signals into one frequency spectrum (106). The method (110) for arbitrary DPSK modulated systems includes the steps of finding all zero mean sequences (112), finding a set of CDO codes (114), establishing relative code shifts and frequency separations for each CDO code (116), and combining the RF signals into one frequency spectrum (118).

<u>100</u>

Fig. 12

**Description**

## TECHNICAL FIELD

This invention relates generally to the field of communication systems, especially those having multiple communication channels implementing orthogonal coding such as Walsh-Hadamard schemes, such as satellite communication systems.

## BACKGROUND OF THE INVENTION

In wireless communication systems such as satellite and land-based systems, signals are transmitted over radio frequency (RF) between transmitters and receivers. Typically, there are multiple transmitters and receivers providing multiple communication channels in the system, and a single terminal may have the ability to both transmit and receive signals. Multiple access techniques are often used to facilitate simultaneous communications for a large number of system users over a finite radio spectrum. The sharing of the radio spectrum is required to achieve high capacity by simultaneously allocating the available bandwidth, or the available amount of channels, to multiple users. For high quality communications, the multiple access techniques must be accomplished without severe degradation of the performance of the system.

Three major multiple access techniques include Time Division Multiple Access (TDMA), Frequency Division Multiple Access (FDMA); and Code Division Multiple Access (CDMA). TDMA systems divide the radio spectrum into time slots, and in each slot only one user is allowed to either transmit or receive. Transmission occurs in bursts, and a single carrier frequency is shared with other users. FDMA systems assign individual channels, which are narrowband, to individual users, and transmission is continuous. CMDA systems multiply a narrowband data message signal by a large bandwidth signal called the spreading signal, which has a pseudo-noise code sequencing at a chip rate. The chip rate is order of magnitudes greater than the data rate of the voice or data message. The users in a CDMA system use the same carrier frequency and may transmit simultaneously. Each user has a unique code word, and the receiver performs a time correlation operation to detect only the codeword desired. All other codewords appear as noise, due to decorrelation.

Some communication systems utilize a combination of two or more TDMA, FDMA and CDMA multiple access techniques and are known as hybrid systems. Hybrid spread spectrum techniques can provide advantages, such as a hybrid FDMA/CDMA system, where the available wideband spectrum is divided into a plurality of subspectras with smaller bandwidths, with each smaller subchannel becoming a narrowband CDMA system having processing gain lower than the original CDMA system.

A problem in communication systems is a lack of time alignment, especially in satellite systems during acquisition, which is the establishing of timing information by the satellite. If the transmitted waveforms from transmitters are not time-aligned, this causes significant adjacent channel interference (ACI). A coding technique is needed that eliminates ACI problems of the prior art.

## SUMMARY OF THE INVENTION

The present invention achieves technical advantages as a system and method of decreasing or eliminating ACI by code selection using a frequency division multiplexing (FDM) system including transmitters that use differential phase shift keying (DPSK) modulation. Complete SDPSK orthogonal (CSO) codes are utilized in SDPSK modulated systems, and complete DPSK orthogonal (CDO) codes are utilized in arbitrary DPSK modulation systems, to eliminate ACI and achieve higher spectral efficiency.

In one embodiment, disclosed is an orthogonal frequency division multiplexing (FDM) communications system for exchanging radio frequency (RF) signals. The system includes a plurality of transmitters adapted to modulate a pair of communication signals using symmetric differential phase shift keying (SDPSK), and a code shift function adapted to shift the transmitter codes to obtain CSO codes. The system includes a receiver adapted to receive and demodulate the modulated signals from the transmitters, wherein adjacent channel interference (ACI) of the communications system is minimized and spectral efficiency is increased.

In another embodiment, disclosed is an orthogonal frequency division multiplexing (FDM) communications system for exchanging radio frequency (RF) signals, including a plurality of transmitters, with each transmitter being adapted to modulate a pair of the RF signals using symmetric differential phase shift keying (SDPSK). A SDPSK sequence is represented by the formula:

Equation 4:
$$\exp(j(\omega_0 n + \frac{\pi}{2} \sum_{k=1}^{\lfloor n/N \rfloor + 1} b_k))$$

where $\omega_0$ = the baseband carrier frequency, $b_k$ = a NRZ bit stream and $b_k \in \{-1, 1\}$, and N= the samples per bit. Each transmitter is assigned a unique code and a code shift function is adapted to shift the transmitter codes to obtain complete SDPSK orthogonal (CSO) codes. The system includes at least one receiver adapted to receive the modulated signals from the transmitters, wherein adjacent channel interference (ACI) of the communications system is minimized.

Also disclosed is a method for selecting codes for use by a plurality of transmitters adapted to transmit RF signals to at least one receiver in an orthogonal frequency division multiplexing (FDM) communications system, each transmitter being adapted to modulate the signals using symmetric differential phase shift keying (SDPSK). The method includes the steps of establishing a set of mutually complete SDPSK orthogonal (CSO) codes, establishing relative code shifts and frequency separations for each CSO code, modulating RF signals with established CSO codes, and combining a plurality of modulated RF signals into one frequency spectrum.

In another embodiment, an orthogonal frequency division multiplexing (FDM) communications system for exchanging radio frequency (RF) signals is disclosed, including a plurality of transmitters, each having a code and adapted to generate a pair of FDM RF communication signals using differential phase shift keying (DPSK). A code shift function is adapted to shift the transmitter codes to obtain complete DPSK orthogonality (CDO). A receiver is adapted to receive and demodulate the FDM RF signals from the transmitters, wherein adjacent channel interference (ACI) of the communications system is reduced and spectral efficiency is increased.

Also disclosed is a method of selecting codes for use by a plurality of transmitters adapted to transmit frequency division multiplexed (FDM) RF signals to at least one receiver in an orthogonal FDM communications system. Each transmitter is adapted to generate the RF signals using differential phase shift keying (DPSK). The method includes the steps of establishing a set of complete DPSK orthogonal (CDO) codes, establishing relative code shifts and frequency separations for each the CDO code, modulating the RF signals with the established CDO codes, and combining a plurality of the modulated RF signals into one frequency spectrum, wherein spectral efficiency of the communications system is improved.

Advantages of the present invention include reducing or eliminating ACI in a wireless communication system. ACI is improved using CSO codes for a SDPSK modulated system and CDO codes for an arbitrary DPSK modulated system.

The spectrum of frequencies is utilized more efficiently, so that more transmissions may be sent over a given bandwidth. Twice as many transmitters may transmit over a given frequency spectrum with the present invention, compared with communication systems of the prior art.

## BRIEF DESCRIPTION OF THE DRAWINGS

In the drawings, which form an integral part of the specification and are to be read in conjunction therewith:

Figure 1 is a block diagram of the wireless communication system of the present invention;
Figure 2 shows the relative shifts of the reference and transmitted data waveforms as a function of the shift or time advance parameter *a*;
Figure 3 shows an autocorrelation of DC waveform using an $H_{16}(16)$ codeword;
Figure 4 illustrates crosscorrelaton of a DC and $2\pi/75$ waveform where both use an $H_{16}(16)$ code word, and a relative code shift with respect to the graph;
Figure 5 shows cross-correlation of a DC and $4\pi/75$ waveform where both use an $H_{16}(16)$ code word;
Figure 6 shows cross-correlation of a DC and $6\pi/75$ waveform where both use an $H_{16}(16)$ code word;
Figure 7 shows cross-correlation of a DC and $74\pi/75$ waveform where both use an $H_{16}(16)$ code word;
Figure 8 shows cross-correlation of a DC and $2\pi/75$ waveform using $H_{16}(16)$ and $H_{16}(6)$ code word, respectively;
Figure 9 illustrates cross-correlation of a DC and $2\pi/75$ waveform using $H_{16}(5)$ and $H_{16}(7)$ code words, respectively;
Figure 10 shows cross-correlation of a DC and $2\pi/75$ waveform using $H_{16}(16)$ and $H_{16}(7)$ code words, respectively;
Figure 11 illustrates the use of CSO sequences during acquisition, which sequences do not interfere with one another at any relative shifts of their codes;
Figure 12 is a flow chart showing process steps for a SDPSK modulated system;
Figure 13 shows relative shifts of the reference and transmitted waveforms as a function of the time shift parameters *a*; and

Figure 14 is a flow chart showing process steps for an arbitrary DPSK modulated system.

Like numerals and symbols are employed in different figures to designate similar components in various views unless otherwise indicated.

## DETAILED DESCRIPTION OF PREFERRED EMBODIMENTS

In communication systems, often orthogonal frequency division multiplexing (FDM) is used for its advantages as a modulation method for multiple transmissions. Unfortunately, orthogonal FDM works well only when all of the transmitters are time-aligned. In certain communication systems such as satellite transmissions, transmitters are not time-aligned during acquisition of the RF signal, and significant ACI results. Prior art methods for reducing ACI during acquisition typically involve increasing the frequency separation of adjacent channels. This is disadvantageous because increasing the channel spacing reduces the number of transmitters from which signals may be acquired in a given bandwidth, thus resulting in an inefficient use of the frequency spectrum.

Some prior art methods use orthogonality to reduce or eliminate ACI, such as pseudo-noise sequences and spread spectrum communication. These techniques do not work in DPSK modulation systems that have a differential nature. The standard concept of orthogonality which is based on inner products does not apply in DSPSK modulation. A method of eliminating ACI in a DSPSK modulated communication system is needed in the art.

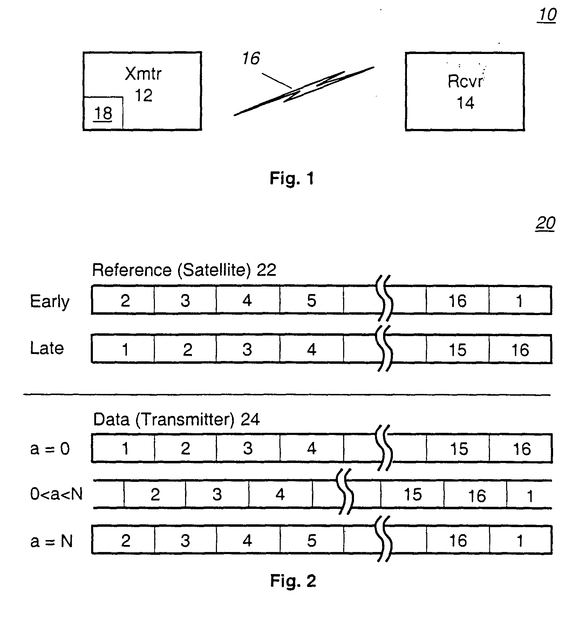

The present invention achieves technical advantages as a communication system and method having little or no ACI, shown generally at 10 in Figure 1. The system comprises a plurality of transmitters 12 in communication via RF 16 with one or more receivers 14. A DPSK modulation format is used and each transmitter 12 in the system is assigned a unique code. A code shift function 18 in each transmitter 12 is adapted to shift the transmitter codes, which in conjunction with frequency spacing, reduces or eliminates ACI. This results in higher spectral efficiency within the frequency spectrum. For symmetric DPSK modulated systems, CSO codes are used, and for arbitrary DPSK modulated systems, CDO codes are used to reduce or eliminate ACI in accordance with the present invention.

Before the details of the present invention are described, conventions and terms used herein will next be defined. N is representative of the number of samples per chip and in the figures, N = 75. L is equal to the number of bits in code and is equal to 16 in the figures. In $A_I$ is the amplitude of interferer, and $A_{SOI}$ is the amplitude of the signal of the interest. In a first embodiment, the modulation format of the present system and method is symmetric differential phase shift keying (SDPSK). Each chip consisting of N = 75 samples, which corresponds to N channels in a FDM scheme. Synchronization is performed by time-correlating against two reference sequences (early and late) which are each L = 16 chips in length. Note that the total length of each reference sequence is $(N^*L)$ = 1200.

Walsh-Hadamard sequences will be used for example codes herein. These sequences may be generated by starting with the order-2 Hadamard matrix:

$$\text{Equation 1:} \qquad H_2 = \begin{bmatrix} 1 & 1 \\ 1 & -1 \end{bmatrix}$$

And generating the higher order matrices using the following recursion:

$$\text{Equation 2:} \qquad H_k = H_{k/2} \times H_2$$

Where "x" in Equation 2 denotes the Kronecker product. The full order-16 Hadamard ($H_{16}$) matrix is shown in Equation 3.

Equation 3:

$$H_{16} = \begin{bmatrix} 1 & 1 & 1 & 1 & 1 & 1 & 1 & 1 & 1 & 1 & 1 & 1 & 1 & 1 & 1 & 1 \\ 1 & -1 & 1 & -1 & 1 & -1 & 1 & -1 & 1 & -1 & 1 & -1 & 1 & -1 & 1 & -1 \\ 1 & 1 & -1 & -1 & 1 & 1 & -1 & -1 & 1 & 1 & -1 & -1 & 1 & 1 & -1 & -1 \\ 1 & -1 & -1 & 1 & 1 & -1 & -1 & 1 & 1 & -1 & -1 & 1 & 1 & -1 & -1 & 1 \\ 1 & 1 & 1 & 1 & -1 & -1 & -1 & -1 & 1 & 1 & 1 & 1 & -1 & -1 & -1 & -1 \\ 1 & -1 & 1 & -1 & -1 & 1 & -1 & 1 & 1 & -1 & 1 & -1 & -1 & 1 & -1 & 1 \\ 1 & 1 & -1 & -1 & -1 & -1 & 1 & 1 & 1 & 1 & -1 & -1 & -1 & -1 & 1 & 1 \\ 1 & -1 & -1 & 1 & -1 & 1 & 1 & -1 & 1 & -1 & -1 & 1 & -1 & 1 & 1 & -1 \\ 1 & 1 & 1 & 1 & 1 & 1 & 1 & 1 & -1 & -1 & -1 & -1 & -1 & -1 & -1 & -1 \\ 1 & -1 & 1 & -1 & 1 & -1 & 1 & -1 & -1 & 1 & -1 & 1 & -1 & 1 & -1 & 1 \\ 1 & 1 & -1 & -1 & 1 & 1 & -1 & -1 & -1 & -1 & 1 & 1 & -1 & -1 & 1 & 1 \\ 1 & -1 & -1 & 1 & 1 & -1 & -1 & 1 & -1 & 1 & 1 & -1 & -1 & 1 & 1 & -1 \\ 1 & 1 & 1 & 1 & -1 & -1 & -1 & -1 & -1 & -1 & -1 & -1 & 1 & 1 & 1 & 1 \\ 1 & -1 & 1 & -1 & -1 & 1 & -1 & 1 & -1 & 1 & -1 & 1 & 1 & -1 & 1 & -1 \\ 1 & 1 & -1 & -1 & -1 & -1 & 1 & 1 & -1 & -1 & 1 & 1 & 1 & 1 & -1 & -1 \\ 1 & -1 & -1 & 1 & -1 & 1 & 1 & -1 & -1 & 1 & 1 & -1 & 1 & -1 & -1 & 1 \end{bmatrix}$$

and the *m*th row of the above matrix is denoted as $H_{16}(m)$.

Specific rows of $H_{16}$ are used as the time correlation sequences to reduce the ACI during acquisition, when the time transitions among the N channels are not time aligned. When sequences of length greater than L are needed for example when shifting one sequence relative to another, the sequences are periodically extended.

Next, the correlation of SDPSK sequences when different code sequences are employed will be discussed. The SDPSK sequence may be represented as:

Equation 4: $$\exp\left(j\left(\omega_0 n + \frac{\pi}{2} \sum_{k=1}^{\lfloor n/N \rfloor+1} b_k\right)\right)$$

where $\omega_0$ denotes the baseband carrier frequency in radians per second and $b_k$ is a NRZ bit stream, $b_k \in \{-1,1\}$.

The relative shifts of the reference and transmitted waveforms as a function of the time shift or time advance parameter *a* are shown in Figure 2. Assuming that the receiver frequency $\omega_0$ and the receiver code sequence $b_k$, $1 \le k \le L$ are the same as those in the transmitter, and using Equation 4, Figure 2, and assuming that a transmit data transition occurs during a receiver chip interval rather than at a chip boundary, the correlation contribution of the first chip can be described by the following:

Equation 5:

$$\sum_{n=0}^{N-a-1} e^{j\omega_0(n+a)} e^{-j(\omega_0 n+b_1\frac{\pi}{2})} + \sum_{n=N-a}^{N-1} e^{j(\omega_0(n+a)+b_1\frac{\pi}{2})} e^{-j(\omega_0 n+b_1\frac{\pi}{2})}, \text{ for } 1 \leq a \leq N-1$$

Assuming that all code sequences used for time synchronization are zero mean, and extending further to the case where the transmitted signal has a different frequency and a different correlating code sequence, the resulting correlation output is equal to;

Equation 6: 
$$e^{j\omega_1 a}(A \sum_{n=0}^{N-a-1} e^{j(\omega_1-\omega_0)n} + B \sum_{n=N-a}^{N-1} e^{j(\omega_1-\omega_0)n})$$

where:

Equation 7: 
$$A = \sum_{l=1}^{L}[(\prod_{i=1}^{l} b_i)(\prod_{i=l}^{l-1} c_i)], \text{ and}$$

Equation 8: 
$$B = \sum_{l=1}^{L}[(\prod_{i=l}^{l} b_i)(\prod_{i=l}^{l} c_i)],$$

where $\omega_1$ = the transmit frequency, and $c_k$ = the transmit code sequence. Note that ACI of the communication system 10 is completely eliminated when Equation 6 is zero. Thus, in accordance with the present invention, to eliminate ACI, Equation 6 should be made equal to zero. One way to achieve this is for both A and B to simultaneously be equal to zero. This is preferable because the cross-correlation term is zero independent of shift $a$ ($(1 \leq a \leq N - 1)$ and frequency difference ($\omega_1 - \omega_0$). Another way of making Equation 6 be equal to zero is when the two terms in the sum of Equation 6 are both non-zero and cancel each other out. This is both a shift and frequency dependent situation, to be discussed further herein.

Code sequences $b_k$ and $c_k$ which are zero mean and for which A and B are simultaneously zero are denoted SDPSK orthogonal (SO). Note that SO implies orthogonality at only one relative phasing (or relative shift) of one sequence versus another and not under all relative shifts. Examples can be given where a code sequence, under different frequencies, is SO to itself under certain relative shifts. A more powerful, and much more useful, condition is for code sequence $b_k$ and $c_k$ to be SO over all complete shifts of the two sequences. This condition is denoted herein as complete SO (CSO). Two codes $b_i$ and $c_i$ are CSO if they are zero mean and satisfy:

Equation 9: 
$$0 = \sum_{l=1}^{L}[(\prod_{i=1}^{l} b_i)(\prod_{i=1}^{l-1} c_i)],$$

and

Equation 10:

$$0 = \sum_{l=1}^{L} \left[ \left( \prod_{i=1}^{l} b_i \right) \left( \prod_{i=1}^{l} c_i \right) \right]$$

over all relative shifts of the codes $b_j$ and $c_j$. Preferably, these CSO codes are easily determined by computer search using the Equations 9 and 10. Thus, using CSO sequences makes the task of frequency planning, in the case of non-time aligned SDPSK channels, much easier. The code shifting function 18 of the transmitters 12 calculates the above codes and uses them to code the RF signal 16.

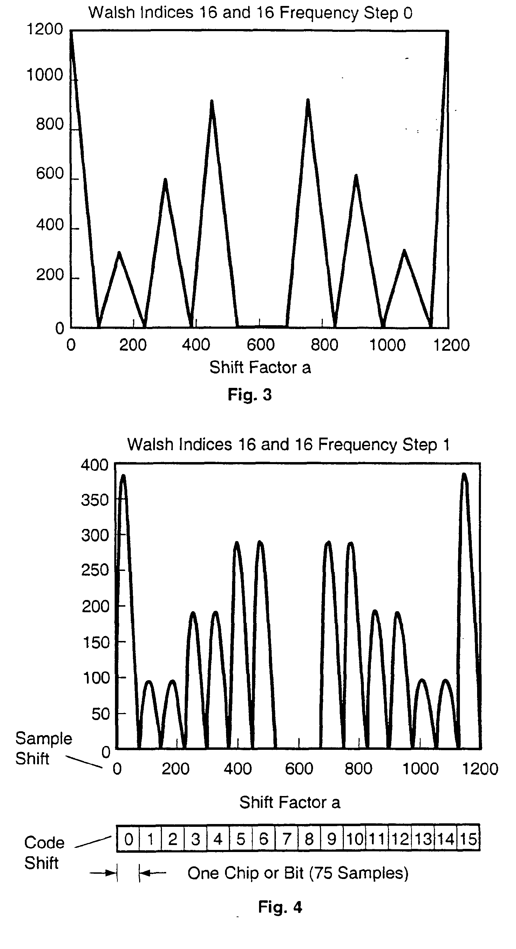

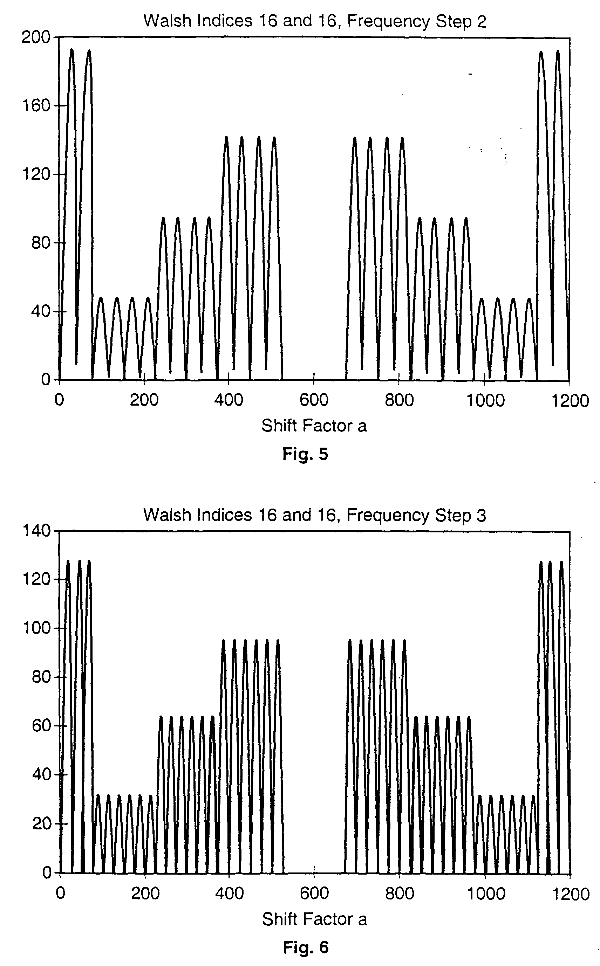

Next, some numeric examples of the theory previously discussed and the determination of possible CSO sequences will be illustrated. In addition, all transmitted and received SDPSK waveforms are assumed to have unit magnitude as in Equation 4, and the carrier frequencies are assumed to be integer multiples of $2\pi/N$. Figures 3 to 7 show the resulting correlations at different time shifts when the transmitter and receiver waveforms use the same code sequence $H_{16}(16)$ (see Equation 3). The receiver frequency is always at 0 and the transmitted frequencies are $0, 2\pi/N$, $4\pi/N$, $6\pi/N$, and $74\pi/N$, respectively. Note that for the same frequency case, Figure 3, the correlation function has a linear characteristic for $0 \leq a \leq 75$.

Figure 3 corresponds to correlation against the late reference and causes a peak value at $a=0$. The $a=75$ value would cause a peak in the early correlation. The correlation curves for both early and late are identical except they are shifted by a factor which is defined as the code shift factor:

Equation 11:        $s = \lfloor a/N \rfloor$.

Preferably, the rough timing is within one chip time before performing timing acquisition. Thus, the normal operation is for $0 \leq a \leq N$ with "on" time defined as $a = N/2$.

Figures 4 through 7 show cases where the transmitter and receiver have different frequencies. These signals can be interpreted as the adjacent channel interferers. Notice that all signals have approximately the same envelope (over the shift factor $a$) which results from them all using the same code sequences. Even though the envelopes are the same, the magnitude drops off as the frequency separation increases which is due to the 1/x rolloff of the $sinc()$ function. Note also that the correlations go to zero at values $a$ which are integer multiples of $N = 75$. This is because the difference frequency is always an integer multiple of $2\pi/N$, and thus at $a = kN$ there are always summations over an integer number of waveform cycles.

Figure 4 shows that for an interferer separated by one frequency bin and having a code shift of 0, the peak correlation is about 380. This peak correlation can be reduced by altering the code shift factor. For example, the peak correlation is only about 90 for code shift 1 and zero for code shifts 7 and 8. This is an example of a sequence which is SO to itself at specific code shifts.

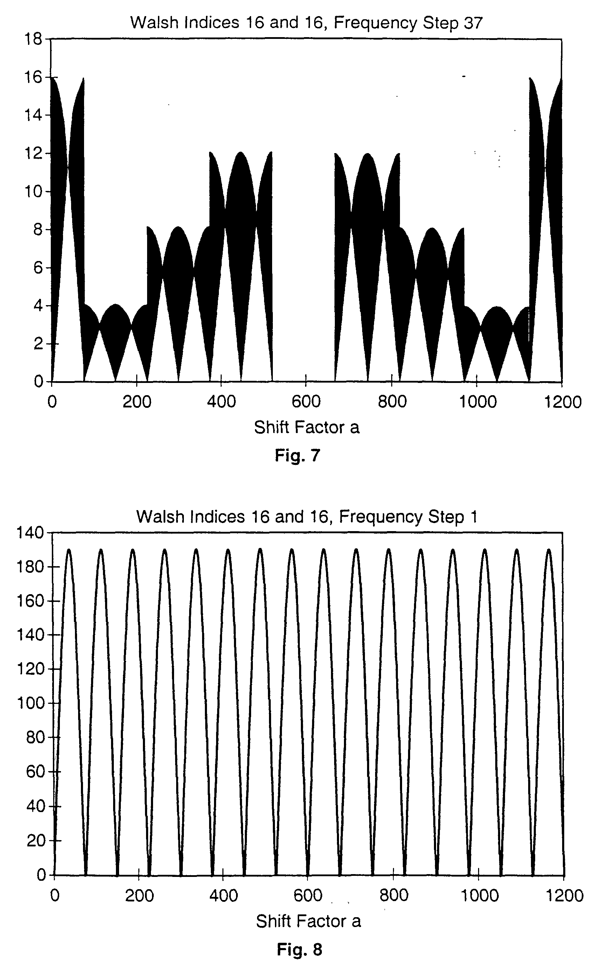

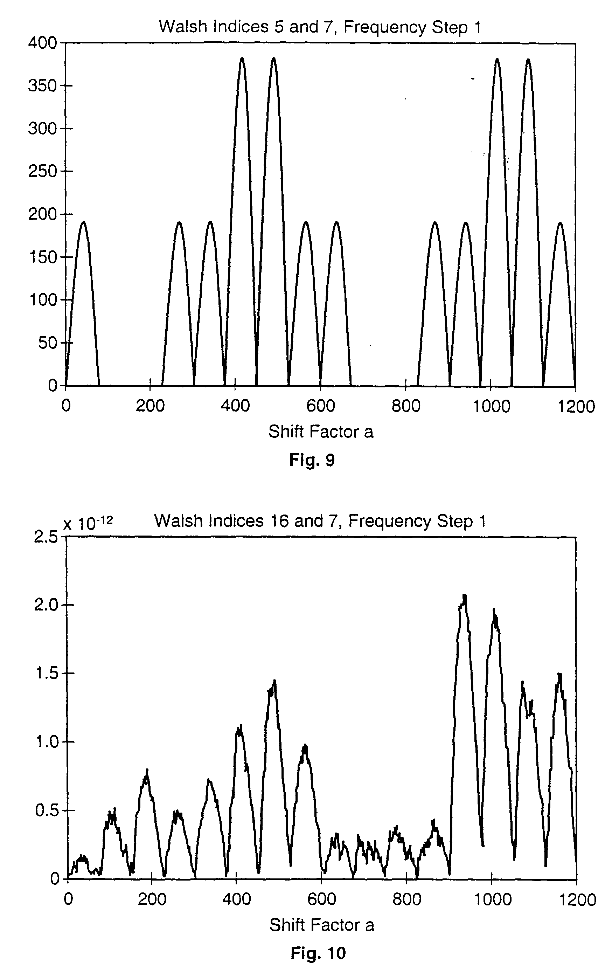

The previous examples were for the case of a transmitter and receiver having the same code sequence. Figures 8, 9 and 10 show cases where the transmitter and receiver use different code sequences. Figure 8 shows the cross correlation of $H_{16}(16)$ and $H_{16}(6)$ and indicates that this is not a very effective code pair for reducing ACI. The $H_{16}(5)$ and $H_{16}(7)$ of Figure 9 represent a better pair of code sequences since the code pair is SO at code shifts of 1, 2, 9, and 10. The best pair shown is the $H_{16}(16)$ and $H_{16}(7)$ of Figure 10. Figure 10 was generated by waveform correlation and is thus limited by the machine precision of the computer. Figure 10 shows that $H_{16}(16)$ and $H_{16}(7)$ are CSO, which can be verified by computing Equations 7 and 8.

Of particular importance in this embodiment of the present invention is finding sets of sequences which are mutually CSO, since this can make frequency allocation planning much easier. CSO sequences can be readily determined through a computer search which evaluates Equations 7 and 8 at all relative shifts of the sequences $b_k$ and $c_k$. As an example, all CSO code pairs over the length 16 Walsh-Hadamard matrix were determined and are cataloged in Table 1. Note that the CSO condition is symmetric so $(i, j)$ implies $(j, i)$.

Table 1:

| $i$ | $j$ |
|---|---|
| 2 | 5 |
| 2 | 7 |
| 2 | 9 |

Table 1:   (continued)

| | |
|---|---|
| 2 | 11 |
| 2 | 13 |
| 2 | 15 |
| 5 | 10 |
| 5 | 12 |
| 5 | 14 |
| 5 | 16 |
| 6 | 9 |
| 6 | 11 |
| 6 | 13 |
| 6 | 15 |
| 7 | 10 |
| 7 | 12 |
| 7 | 14 |
| 7 | 16 |
| 8 | 9 |
| 8 | 11 |
| 8 | 13 |
| 8 | 15 |

All possible code words for a given code word length L can be determined as follows. First, of the $2^L$ possible codes of length L only:

$$\text{Equation 9:} \qquad \frac{L!}{\left(\frac{L}{2}!\right)^2}$$

are zero mean (the zero mean condition forces L to be even). The set of zero mean vectors can be searched for all sets of 2, 3 and so on mutually CSO code words.

From Equation 9 12870 zero mean codewords and (12870/2)=82,812,015 code word pairs were found. Of these pairs only 3088 (or abut 0.0037%) were CSO. Unfortunately, there were no sets of 3 mutually CSO code words for particular case of N=75, L=16.

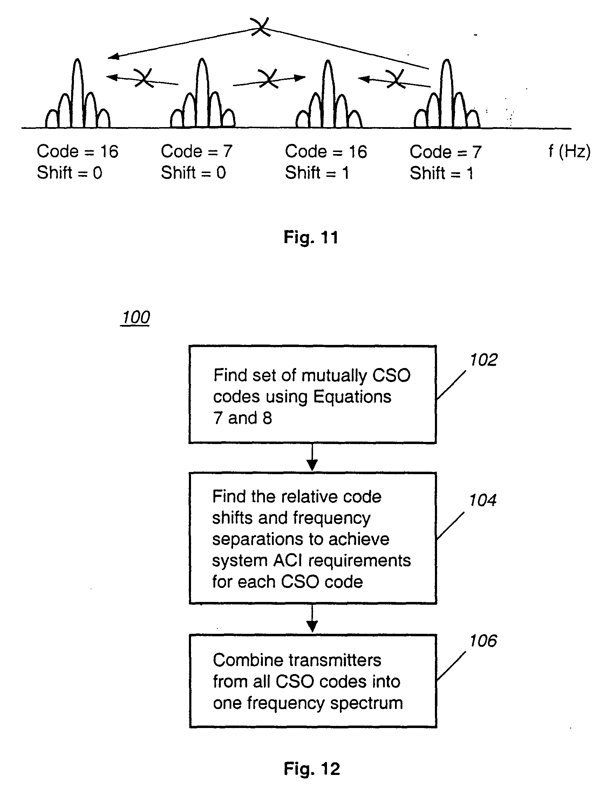

The use of CSO frequency in accordance with the present invention during acquisition is shown in Figure 11. Transmitters using CSO frequencies do not interfere with one another at any relative shifts of their codes. As a result, extra or additional transmitters may be added on different CSO codes. These additional transmitters do not add any ACI to the original transmitters on the other CSO codes. For the specific example discussed herein, this results in the doubling of the acquisition capacity of the communication system with no loss of performance or increase in complexity or interference.

A flow chart for a first embodiment of a method of the present invention is illustrated generally at 100 in Figure 12. First, a set of mutually CSO codes is found using Equation 7 and 8 described earlier (step 102). Then, for each CSO code, the relative code shift and frequency separations are found that achieve the ACI requirements of the system (step 104). The code shifts should be optimized so that the frequency separation is at a minimum. Next, the RF signals of the communications system 10 are modulated with the established CSO codes, and the modulated RF signals are combined into one frequency spectrum (step 106). Because the CSO codes are mutually CSO, the transmitters using different CSO codes do not interfere with one another, resulting in greater spectral efficiency during acquisition.

It has been heretofore discussed herein how CSO codes may be selected to minimize ACI during acquisition of SDPSK waveforms in a frequency division multiplexed system. However, the present invention is also applicable to arbitrary differential phase shift keying (DPSK) modulation, to be described next.

A second embodiment of the present invention comprises reducing or eliminating ACI in an arbitrary DPSK modulated communications system using CDO codes. Two quantities: an angle and bit values, are used to represent various DPSK modulation formats. Denoting the angle as $\theta$, the bits as $b_k$, the modulation frequency as $\omega_0$, and the sample time as $n$, a general representation of DPSK modulation is given as:

Equation 10:
$$A \exp\left(j\left(\omega_o n + \theta \sum_{k=1}^{\lfloor n/N \rfloor + 1} b_k\right)\right)$$

Examples of this representation are given in Table 2, illustrating how this representation generalizes to arbitrary DPSK formats. Table 2 shows examples of the general format used to represent various DPSK modulations.

Table 2:

| Mod. Name | Angle | Bit Values |
|---|---|---|
| SDBPSK | $\theta = \frac{\pi}{2}$ | $b_k \in \{-1,1\}$ |
| SDQPSK | $\theta = \frac{\pi}{4}$ | $b_k \in \{-3,-1,1,3\}$ |
| DQPSK | $\theta = \frac{\pi}{2}$ | $b_k \in \{-1, 0, 1, 2\}$ |
| SD8PSK | $\theta = \frac{\pi}{8}$ | $b_k \in \{\pm7, \pm5, \pm3, \pm1\}$ |

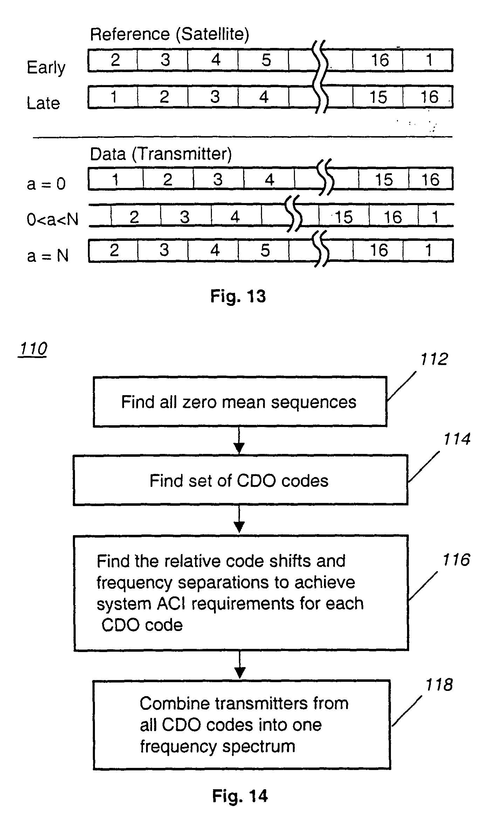

The correlator output may be derived assuming that the transmitter and receiver have the same frequency $\omega_0$ and code sequence $b_k$, $1 \leq k < L$. Referring to Figure 13, and assuming that a transmit data transition occurs during a receiver chip interval (and not a chip boundary), the correlation contribution of the first chip can be written:

Equation 11:
$$\sum_{n=0}^{N-a-1} e^{j\omega_0(n+a)} e^{-j(\omega_0 n + \theta b_1)} + \sum_{n=N-a}^{N-1} e^{j(\omega_0(n+a) + \theta b_1)} e^{-j(\omega_0 n + \theta b_1)} \quad 1 \leq a \leq N-1$$

Note that without loss of generality, the above equation ignores an arbitrary phase angle of the transmitted waveform. The number a above represents the advancement of the transmitted data, in samples, relative to the late reference in the receiver. Simplifying Equation 11 gives:

Equation 12: $\quad e^{j\omega_0 a}[e^{\rightarrow j\theta b^1}(N - a) + a]\ 1 \leq a \leq N - 1$

Using a similar derivation it can be shown that the contribution from any code bit $b_k$ is:

Equation 13 : $\quad e^{j\omega_0 a}[e^{-j\theta b_k}(N - a) + a]\ 1 \leq a \leq N - 1$

The total output of the correlator includes the contributions over all $L$ bits. Summing the contributions over all $L$ bits shown in Equation 13 gives:

Equation 14:
$$e^{j\omega_0 a}\left[(N-a)(\sum_{l=1}^{L}e^{-j\theta b_l})+La\right] \quad 1 \le a \le N-1$$

The phase term in the correlator output in Equation 14 can be neglected. The first term in the brackets in Equation 14 is an undesirable bias term that can be eliminated by choosing "zero mean" code sequences $b_k$, where zero mean is defined herein as being:

Equation 15:
$$0 = \sum_{l=1}^{L}e^{-j\theta b_l}$$

Preferably, the code sequences are zero mean in this embodiment of the invention. It is assumed that all code sequences used for time synchronization are zero mean for the remainder of this description.

Next, these results are extended to the case where the transmitted signal has a different frequency and a different correlating code sequence. Denoting the transmit frequency as $\omega_1$ and the transmit code sequence as $c_k$, the contribution of the first chip to the correlation output is:

$$\sum_{n=0}^{N-a-1}e^{j\omega_1(n+a)}e^{-j(\omega_0 n+\theta b_1)} + \sum_{n=N-a}^{N-1}e^{j(\omega_1(n+a)+\theta c_1)}e^{-j(\omega_0 n+\theta b_1)}$$

Equation 16:
$$= e^{j\omega_1 a}(e^{-j\theta b_1}\sum_{n=0}^{N-a-1}e^{j(\omega_1-\omega_0)n} + e^{-j\theta b_1}e^{j\theta c_1}\sum_{n=N-a}^{N-1}e^{j(\omega_1-\omega_0)n})$$

In a similar manner, the contribution from the second bit is:

Equation 17:
$$e^{j\omega_1 a}(e^{-j\theta(b_1+b_2)}e^{j\theta c_1}\sum_{n=0}^{N-a-1}e^{j(\omega_1-\omega_0)n} + e^{-j\theta(b_1+b_2)}e^{j\theta(c_1+c_2)}\sum_{n=N-a}^{N-1}e^{j(\omega_1-\omega_0)n})$$

Generalizing to the contribution from an arbitrary chip $b_1$ gives:

Equation 18:
$$e^{j\omega_1 a}\left(\left(\prod_{i=1}^{l}e^{-j\theta b_i}\prod_{i=1}^{l-1}e^{j\theta c_i}\right)\sum_{n=0}^{N-a-1}e^{j(\omega_1-\omega_0)n} + \left(\prod_{i=1}^{l}e^{-j\theta b_i}\prod_{i=1}^{l}e^{j\theta c_i}\right)\sum_{n=N-a}^{N-1}e^{j(\omega_1-\omega_0)}\right)$$

Where it is assumed that:

$$\prod_{i=1}^{0} c_i = 1$$

Summing over all *L* bits shows that the resulting correlation contribution of a chip is:

Equation 19:
$$e^{j\omega_1 a}\left(A\sum_{n=0}^{N-a-1}e^{j(\omega_1-\omega_0)n} + B\sum_{n=N-a}^{N-1}e^{j(\omega_1-\omega_0)n}\right)$$

where:

$$A = (e^{-j\theta b1} + e^{-j\theta b1}e^{-j\theta b2}e^{j\theta c1} + e^{-j\theta b1}e^{-j\theta b2}e^{-j\theta b3}e^{j\theta c1}e^{j\theta c2+\cdots}$$
$$+ e^{-j\theta b1}e^{-j\theta b2}e^{-j\theta b3}\ldots e^{-j\theta bL}e^{j\theta c1}e^{j\theta c2}e^{j\theta c3}\ldots e^{j\theta cL-1})$$

or:

Equation 20:
$$A = \sum_{l=1}^{L}\left[\left(\prod_{i=1}^{l}e^{-j\theta bi}\right)\left(\prod_{i=1}^{l-1}e^{j\theta ci}\right)\right],$$

$^2$ and:

$$B = (e^{-j\theta b1}e^{j\theta c1} + e^{-j\theta b1}e^{-j\theta b2}e^{j\theta c1}e^{j\theta c2} + e^{-j\theta b1}e^{-j\theta b2}e^{-j\theta b3}e^{j\theta c1}e^{j\theta c2}e^{j\theta c3} + \ldots$$
$$+ e^{-j\theta b1}e^{-j\theta b2}e^{-j\theta b3}\ldots e^{-j\theta bL}e^{j\theta c1}e^{j\theta c2}e^{j\theta c3}\ldots e^{j\theta cL})$$

or:

Equation 21:
$$B = \sum_{l=1}^{L}\left[\left(\prod_{i=1}^{l}e^{-j\theta bi}\right)\left(\prod_{i=1}^{l}e^{j\theta ci}\right)\right]$$

From this point on, the determination of sequences (such as SO and CSO sequences) proceeds as previously described for the first embodiment. For example, a computer search may be made over all zero mean sequences, as defined in Equation 15, to see where zeros simultaneously occur in Equations 20 and 21. If zeros occur at one relative shift, then those two sequences are denoted DO (to differentiate sequences corresponding to the more general DPSK modulations) at that relative shift. Sequences which are DO at all relative shifts are denoted as CDO. Equations 20 and 21 give conditions under which DO and CDO sequences exist but do not guarantee their existence. mean sequences are found (step 112), and the set of CDO codes is found (step 114). For each CDO code, the relative code shift and frequency separations are found that achieve the ACI requirements of the system (step 116), with the code shifts being optimized so that the frequency separation is at a minimum. The RF signals of the communications system 10 are modulated with the established CDO codes, and the modulated RF signals are combined into one frequency spectrum (step 118).

Next, an example illustrative of CDO sequences for higher order modulations will be described. SDQPSK modulation is used and the code sequences are length 8 (L=8). As a first step in determining CDO sequences, all zero mean sequences are identified. To be considered zero mean, a sequence must have an equal number of -3's and 1's, and an equal number of 3's and -1's. The case where the sequence is all {3,-1} pairs or all {-3,1} pairs is not counted since it corresponds to the binary modulation case. Counting the three possibilities: (1) one {3, -1} pair and three {-3, 1} pairs; (2) two {3, -1} pairs and two {-3, 1} pairs; and (3) three {3, -1} pairs and one {-3, 1} pair; gives the total number of zero mean sequences as:

$$\text{Equation 22:} \qquad \frac{8!}{(3!)^2} + \frac{8!}{(2!)^4} + \frac{8!}{(3!)^2} = 4760$$

A computer search through these possibilities showed that there were 128 pairs from this exemplary set which were CDO. Actually this number overstates the number of pairs because some pairs are relative shifts of one another. Two pairs found are:

{-1, -1, -3, 1, 3, 3, 1, -3}, {-3, -3, 3, -1, 1, 1, -1, 3}

and:

{-1, 3, 1, 1, 3, -1, -3,-3}, {-3, 1, -1, -1, 1, -3, 3, 3},

for example. Therefore, the concepts of SO and CSO sequences for SDBPSK disclosed herein may be extended to higher order symmetric DPSK modulations using CDO codes.

The present invention achieves technical advantage as a system and method for selecting codes for use by multiple transmitters in an orthogonal FDM system. The shifted codes greatly reduce or eliminate adjacent channel interference (ACI) during timing acquisition when the waveforms from each transmitter are not time-aligned. An advantage of the invention is that many more transmitters can transmit in a given bandwidth thereby increasing spectral efficiency since the ACI has been reduced, thus improving the efficiency of the FDM system during acquisition. ACI is improved using CSO codes for a SDPSK modulated system and CDO codes for an arbitrary DPSK modulated system.

While this invention has been described with reference to illustrative embodiments, this description is not intended to be construed in a limiting sense. Various modifications and combinations of the illustrative embodiments, as well as other embodiments of the invention, will be apparent to persons skilled in the art upon reference to the description. For example, while the present invention has been described in conjunction with a satellite communications system, it may also be utilized in other wireless systems such as telecommunications. Also, the SO and CSO sequences of the present invention may be extended to higher order symmetric DPSK modulation. The invention is preferably implemented in software, but may also be implemented in hardware, as well. It is therefore intended that the appended claims encompass any such modifications or embodiments.

**Claims**

1.  An orthogonal frequency division multiplexing (FDM) communications system for exchanging radio frequency (RF) signals, comprising:

    a plurality of transmitters, each said transmitter having a code, each said transmitter adapted to generate a pair of FDM RF communication signals using symmetric differential phase shift keying (SDPSK);
    a code shift function adapted to shift said transmitter codes to obtain complete SDPSK orthogonality (CSO); and
    at least one receiver adapted to receive and demodulate said FDM RF signals from said transmitters, wherein adjacent channel interference (ACI) of the communications system is reduced and spectral efficiency is increased.

2.  The communications system of Claim 1 wherein each said pair of FDM RF signals from said transmitters comprise a zero mean code sequence $b_k$ and $c_k$, wherein said code shift function is adapted to shift said $b_k$ and $c_k$ code sequences so they are SDPSK orthogonal (SO) at one relative shift of one sequence versus another said sequence.

3.  The communications system of Claim 2 wherein said sequences $b_k$ and $c_k$ are SO over all complete shifts of said sequences.

4.  The communications system of Claim 3 wherein said transmitters are adapted to modulate said pair of FDM RF signals with a SDPSK sequence represented by the formula:

Equation 4:
$$\exp(j(\omega_0 n + \frac{\pi}{2} \sum_{k=1}^{\lfloor n/N \rfloor + 1} b_k))$$

wherein $\omega_0$ = the baseband carrier frequency, $b_k$ = a NRZ bit stream and $b_k \in \{-1, 1\}$, and N = the number of channels.

5. The communications system of Claim 4 wherein the correlation contribution of a chip is equal to:

Equation 6:
$$e^{j\omega_1 a} (A \sum_{n=0}^{N-a-1} e^{j(\omega_1 - \omega_0)n} + B \sum_{n=N-a}^{N-1} e^{j(\omega_1 - \omega_0)n}),$$

, wherein

Equation 7:
$$A = \sum_{l=1}^{L} [(\prod_{i=1}^{l} b_i)(\prod_{i=l}^{l-1} c_i)],$$

, and

Equation 8:
$$B = \sum_{l=1}^{L} [(\prod_{i=l}^{l} b_i)(\prod_{i=l}^{l} c_i)].$$

6. An orthogonal frequency division multiplexing (FDM) communications system for exchanging FDM radio frequency (RF) signals, comprising:

a plurality of transmitters, each said transmitter having a code, each said transmitter adapted to generate a pair of said FDM RF signals using symmetric differential phase shift keying (SDPSK) with a SDPSK sequence represented by the formula:

Equation 4:
$$\exp(j(\omega_0 n + \frac{\pi}{2} \sum_{k=1}^{\lfloor n/N \rfloor + 1} b_k))$$

wherein $\omega_0$ = the baseband carrier frequency, $b_k$ = a NRZ bit stream and $b_k \in \{-1, 1\}$, and N = the number of channels, each said transmitter being assigned a unique code;
a code shift function adapted to shift said transmitter codes; and
at least one receiver adapted to receive and demodulate said modulated signals from said transmitters, wherein adjacent channel interference (ACI) of the communications system is minimized and spectral efficiency is increased.

7. The communications system of Claim 6 wherein said SDPSK sequence comprises a chip rate, the correlation contribution of said chip rate being equal to:

Equation 6:
$$e^{j\omega_1 a} (A \sum_{n=0}^{N-a-1} e^{j(\omega_1 - \omega_0)n} + B \sum_{n=N-a}^{N-1} e^{j(\omega_1 - \omega_0)n}),$$

wherein:

Equation 7:
$$A = \sum_{l=1}^{L} [(\prod_{i=1}^{l} b_i)(\prod_{i=1}^{l-1} c_i)] ,$$

and

Equation 8:
$$B = \sum_{l=1}^{L} [(\prod_{i=l}^{l} b_i)(\prod_{i=l}^{l} c_i)] .$$

8. A method of selecting codes for use by a plurality of transmitters adapted to transmit frequency division multiplexed (FDM) RF signals to at least one receiver in an orthogonal FDM communications system, each said transmitter adapted to generate said RF signals using symmetric differential phase shift keying (SDPSK), said method comprising the steps of:

establishing a set of mutually complete SDPSK orthogonal (CSO) codes;
establishing relative code shifts and frequency separations for each said CSO code;
modulating said RF signals with said established CSO codes; and
combining a plurality of said modulated RF signals into one frequency spectrum, wherein spectral efficiency of the communications system is improved.

9. The method of Claim 8 wherein said step of establishing a set of mutually CSO codes comprises utilizing a SDPSK sequence represented by the formula:

Equation 4:
$$\exp(j(\omega_0 n + \frac{\pi}{2} \sum_{k=1}^{\lfloor n/N \rfloor + 1} b_k))$$

where $\omega_0$ = the baseband carrier frequency, $b_k$ = a NRZ bit stream and $b_k \in \{-1, 1\}$, and N = the number of channels.

10. The method of Claim 9 wherein said step of establishing a set of mutually CSO codes comprises calculating the correlation contribution of a chip rate of said sequence, said correlation contribution being equal to:

Equation 6:
$$e^{j\omega_1 a} (A \sum_{n=0}^{N-a-1} e^{j(\omega_1 - \omega_0)n} + B \sum_{n=N-a}^{N-1} e^{j(\omega_1 - \omega_0)n}) ,$$

wherein

Equation 7:
$$A = \sum_{l=1}^{L} [(\prod_{i=1}^{l} b_i)(\prod_{i=l}^{l-1} c_i)],$$

and

$$\text{Equation 8:} \quad B = \sum_{l=1}^{L} [(\prod_{t=l}^{l} b_t)(\prod_{i=l}^{l} c_i)].$$

**11.** The method of Claim 8 wherein said communications system has adjacent channel interference (ACI) requirements, wherein said step of establishing code shifts and frequency separations is performed in accordance with said ACI requirements.

**12.** An orthogonal frequency division multiplexing (FDM) communications system for exchanging radio frequency (RF) signals, comprising:

a plurality of transmitters, each said transmitter having a code, each said transmitter adapted to generate a pair of FDM RF communication signals using differential phase shift keying (DPSK);
a code shift function adapted to shift said transmitter codes to obtain complete DPSK orthogonality (CDO); and
at least one receiver adapted to receive and demodulate said FDM RF signals from said transmitters, wherein adjacent channel interference (ACI) of the communications system is reduced and spectral efficiency is increased.

**13.** The communications system of Claim 12 wherein each said pair of FDM RF signals from said transmitters comprise zero mean code sequences $b_k$, wherein said code shift function is adapted to shift said $b_k$ code sequences so they are DPSK orthogonal (DO) at one relative shift of one sequence versus another said sequence.

**14.** The communications system of Claim 13 wherein said transmitters are adapted to modulate said pair of FDM RF signals with an arbitrary DPSK sequence represented by the formula:

$$\text{Equation 10:} \qquad A \exp(j(\omega_o n + \theta \sum_{k=1}^{\lfloor n/N \rfloor + 1} b_k))$$

wherein $\omega_0$ = the baseband carrier frequency, $b_k$ = a NRZ bit stream and $b_k \in \{-1, 1\}$, N = the number of channels, and $\theta$ is the angle.

**15.** The communications system of Claim 14 wherein the correlation contribution of a chip of said DPSK sequence is equal to:

$$\text{Equation 19:} \qquad e^{j\omega_1 a}(A \sum_{n=0}^{N-a-1} e^{j(\omega_1 - \omega_0)n} + B \sum_{n=N-a}^{N-1} e^{j(\omega_1 - \omega_0)n}),$$

, wherein;

$$\text{Equation 20:} \qquad A = \sum_{l=1}^{L} \left[ \left( \prod_{i=1}^{l} e^{-j\theta b_i} \right) \left( \prod_{i=1}^{l-1} e^{j\alpha c_i} \right) \right],$$

and

Equation 21:
$$B = \sum_{l=1}^{L}\left[\left(\prod_{i=1}^{l} e^{-j\theta b i}\right)\left(\prod_{i=1}^{l} e^{j\alpha c i}\right)\right].$$

16. A method of selecting codes for use by a plurality of transmitters adapted to transmit frequency division multiplexed (FDM) RF signals to at least one receiver in an orthogonal FDM communications system, each said transmitter adapted to generate said RF signals using differential phase shift keying (DPSK), said method comprising the steps of:

    establishing a set of complete DPSK orthogonal (CDO) codes;
    establishing relative code shifts and frequency separations for each said CDO code;
    modulating said RF signals with said established CDO codes; and
    combining a plurality of said modulated RF signals into one frequency spectrum, wherein spectral efficiency of the communications system is improved.

17. The method of Claim 16 wherein said step of establishing a set of CDO codes comprises utilizing an arbitrary DPSK sequence represented by the formula:

Equation 10:
$$A \exp(j(\omega_o n + \theta \sum_{k=1}^{\lfloor n/N \rfloor + 1} b_k)),$$

where $\omega_0$ = the baseband carrier frequency, $b_k$ = a NRZ bit stream and $b_k \in \{-1, 1\}$, N = the number of channels, and $\theta$ is the angle.

18. The method of Claim 17 wherein said step of establishing a set of CDO codes comprises calculating the correlation contribution of a chip rate of said DPSK sequence, said correlation contribution being equal to:

Equation 19:
$$e^{j\omega 1 a}(A \sum_{n=0}^{N-a-1} e^{J(\omega 1 - \omega 0)n} + B \sum_{n=N-a}^{N-1} e^{J(\omega 1 - \omega 0)n}),$$

wherein

Equation 20:
$$A = \sum_{l=1}^{L}\left[\left(\prod_{i=1}^{l} e^{-j\theta b i}\right)\left(\prod_{i=1}^{l-1} e^{j\alpha c i}\right)\right],$$

and

Equation 21:
$$B = \sum_{l=1}^{L}\left[\left(\prod_{i=1}^{l} e^{-j\theta b i}\right)\left(\prod_{i=1}^{l} e^{j\alpha c i}\right)\right].$$

19. The method of Claim 16 further comprising the step of: finding all zero mean sequences of said DPSK sequence.

**Fig. 1**

**Fig. 2**

## Walsh Indices 16 and 16 Frequency Step 0

Shift Factor a

**Fig. 3**

## Walsh Indices 16 and 16 Frequency Step 1

Sample Shift

Shift Factor a

Code Shift

| 0 | 1 | 2 | 3 | 4 | 5 | 6 | 7 | 8 | 9 | 10 | 11 | 12 | 13 | 14 | 15 |

One Chip or Bit (75 Samples)

**Fig. 4**

Walsh Indices 16 and 16, Frequency Step 2

Shift Factor a

**Fig. 5**

Walsh Indices 16 and 16, Frequency Step 3

Shift Factor a

**Fig. 6**

Walsh Indices 16 and 16, Frequency Step 37

Shift Factor a

**Fig. 7**

Walsh Indices 16 and 16, Frequency Step 1

Shift Factor a

**Fig. 8**

Walsh Indices 5 and 7, Frequency Step 1

Shift Factor a

**Fig. 9**

Walsh Indices 16 and 7, Frequency Step 1

Shift Factor a

**Fig. 10**

Code = 16    Code = 7     Code = 16    Code = 7          f (Hz)
Shift = 0    Shift = 0    Shift = 1    Shift = 1

**Fig. 11**

_100_

Find set of mutually CSO codes using Equations 7 and 8          _102_

Find the relative code shifts and frequency separations to achieve system ACI requirements for each CSO code          _104_

Combine transmitters from all CSO codes into one frequency spectrum          _106_

**Fig. 12**

Reference (Satellite)

Early | 2 | 3 | 4 | 5 | ... | 16 | 1 |

Late | 1 | 2 | 3 | 4 | ... | 15 | 16 |

Data (Transmitter)

$a = 0$ | 1 | 2 | 3 | 4 | ... | 15 | 16 |

$0 < a < N$ | 2 | 3 | 4 | ... | 15 | 16 | 1 |

$a = N$ | 2 | 3 | 4 | 5 | ... | 16 | 1 |

**Fig. 13**

_110_

Find all zero mean sequences   _112_

↓

Find set of CDO codes   _114_

↓

Find the relative code shifts and frequency separations to achieve system ACI requirements for each CDO code   _116_

↓

Combine transmitters from all CDO codes into one frequency spectrum   _118_

**Fig. 14**